(19) Europäisches Patentamt / European Patent Office / Office européen des brevets

(11) **EP 4 230 660 A1**

(12) **EUROPEAN PATENT APPLICATION**
published in accordance with Art. 153(4) EPC

(43) Date of publication:
**23.08.2023 Bulletin 2023/34**

(21) Application number: **21879691.0**

(22) Date of filing: **15.06.2021**

(51) International Patent Classification (IPC):
**C08F 6/06** (2006.01)          **C08F 20/04** (2006.01)

(52) Cooperative Patent Classification (CPC):
**C08F 6/06; C08F 20/04**

(86) International application number:
**PCT/JP2021/022639**

(87) International publication number:
**WO 2022/079946 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020   JP 2020174421**

(71) Applicant: **Nippon Shokubai Co., Ltd.**
**Osaka-shi, Osaka 541-0043 (JP)**

(72) Inventors:
• **SHIMIZU, Ikuo**
**Suita-shi, Osaka 564-0034 (JP)**
• **SAKAMOTO, Noboru**
**Suita-shi, Osaka 564-0034 (JP)**

(74) Representative: **Cabinet Beau de Loménie**
**158, rue de l'Université**
**75340 Paris Cedex 07 (FR)**

(54) **STORAGE METHOD AND USAGE METHOD FOR POLYCARBOXYLIC ACID-BASED POLYMER SOLUTION**

(57)    The present invention provides a method for storing a polycarboxylic acid copolymer solution capable of preventing or reducing cloudiness and an increase in viscosity of a polycarboxylic acid copolymer solution after storage. The present invention relates to the method for storing a solution of a polycarboxylic acid polymer, the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer, the polycarboxylic acid polymer containing a structural unit derived from an unsaturated carboxylic acid monomer in a content of 85 to 100 mol% based on 100 mol% of structural units derived from all monomers, the storage method comprising storing at 40°C or higher.

EP 4 230 660 A1

**Description**

TECHNICAL FIELD

The present invention relates to methods for storing polycarboxylic acid polymer solutions and methods for using polycarboxylic acid polymer solutions. Specifically, the present invention relates to a method for storing and a method for using polycarboxylic acid polymer solutions useful for various applications such as inorganic particle dispersants, water treatment agents, builders for detergents, and compositions for detergents.

BACKGROUND ART

Polycarboxylic acid polymers have carboxyl groups and/or salts thereof in the molecule, and have an ability to disperse inorganic particles and the like. Such polycarboxylic acid polymers are widely used for various applications such as dispersants for inorganic particles, water treating agents, builders for detergents, and compositions for detergents.

Polycarboxylic acid copolymers in industrial use are desired to have excellent storage stability.

Techniques for improving the stability of polycarboxylic acid copolymers have been developed. For example, Patent Literature 1 discloses a polymer including a polymer containing at least one carboxylic acid, wherein the polymer containing at least one carboxylic acid contains segments having predetermined structures, and the polymer containing at least one carboxylic acid is stable and has a molecular weight of about 1000 g/mol to about 10,000 g/mol.

For example, Patent Literature 2 discloses a binder including: a polymer having a hydroxyl group; and an ammonium salt of an inorganic acid, in which: the polymer contains a structural unit derived from a monomer represented by a specific structure and a structural unit derived from a monomer containing a carboxylic acid (salt) group; a content of the structural unit derived from a monomer represented by a specific structure is from 5 mol% to 40 mol% with respect to 100 mol% of structural units derived from all monomers; a content of the structural unit derived from a monomer containing a carboxylic acid (salt) group is from 60 mol% to 95 mol% with respect to 100 mol% of the structural units derived from all the monomers; 2 mol% or more of the carboxylic acid (salt) groups in the polymer are neutralized with a volatile base and/or a nonvolatile base; 0 mol% to 35 mol% of the carboxylic acid (salt) groups in the polymer are neutralized with the nonvolatile base; and 0 mol% to 100 mol% of the carboxylic acid (salt) groups in the polymer are neutralized with the volatile base.

CITATION LIST

- Patent Literature

   Patent Literature 1: JP 2014-505753 T
   Patent Literature 2: JP 6027297 B

SUMMARY OF INVENTION

- Technical Problem

Patent Literatures 1 and 2 disclose polymers evaluated to be stable based on changes in molecular weights. The present inventors have found a problem that a solution of a polycarboxylic acid polymer having a weight-average molecular weight, a percentage of a structural unit derived from an unsaturated carboxylic acid monomer, and a degree of neutralization of carboxyl groups, each falling within predetermined ranges, undergoes an increase in viscosity and cloudiness even in the absence of changes in molecular weight after storage.

The present invention has been made in view of the above-mentioned current situation, and aims to provide a method for storing a polycarboxylic acid copolymer solution capable of preventing or reducing cloudiness and an increase in viscosity of a polycarboxylic acid copolymer solution after storage.

- Solution to Problem

The present inventors have examined various studies on polycarboxylic acid polymer solutions, and have found that cloudiness and an increase in viscosity of a solution of a polycarboxylic acid polymer having a weight-average molecular weight, a percentage of a structural unit derived from an unsaturated carboxylic acid monomer, and a degree of neutralization of carboxyl groups, each falling within predetermined ranges, can be reduced or prevented by storing the solution at 40°C or higher. Thus, the problem was successfully solved, leading to completion of the present invention.

That is, the present invention relates to a method for storing a solution of a polycarboxylic acid polymer,

the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer,
the polycarboxylic acid polymer containing a structural unit derived from an unsaturated carboxylic acid monomer in a content of 85 to 100 mol% based on 100 mol% of structural units derived from all monomers,
the storage method including storing at 40°C or higher.

Preferably, the polycarboxylic acid polymer contains a structure derived from a chain transfer agent.

Preferably, the polycarboxylic acid polymer contains the structure derived from a chain transfer agent in a content of 0.7 to 15.0 mol% based on 100 mol% of structural units derived from all monomers.

Preferably, the chain transfer agent contains a phosphorus atom.

Preferably, the polycarboxylic acid polymer contains a structural unit derived from (meth)acrylic acid or a salt thereof in a content of 90 to 100 mol% based on 100 mol% of structural units derived from all monomers.

Preferably, the solution of the polycarboxylic acid polymer is stored for one day or more.

Preferably, in the method for storing a solution of a polycarboxylic acid polymer, a period for which the solution is stored at 40°C or higher accounts for 50% or more of the total storage period.

Preferably, in the method for storing a solution of a polycarboxylic acid polymer, the solution, when stored at 40°C for 70 days, has a viscosity change rate of 40% or lower.

Preferably, in the method for storing a solution of a polycarboxylic acid polymer, the solution, when stored at 40°C for 70 days, has a haze of 45% or less.

The present invention also relates to a method for using a solution of a polycarboxylic acid polymer,

the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer,
the method including, after the solution of the polycarboxylic acid polymer is stored at lower than 40°C, heating the solution to 40°C or higher before use.

Preferably, in the method for using a solution of a polycarboxylic acid polymer, a difference in viscosity of the polycarboxylic acid polymer solution between after heating to 40°C or higher and at the beginning of storage is 50% or less of a difference in viscosity of the polycarboxylic acid polymer solution between at the beginning of the storage and after being stored at lower than 40°C but before heating.

Preferably, in the method for using a solution of a polycarboxylic acid polymer, the polycarboxylic acid polymer solution has a haze of 45% or more after being stored at lower than 40°C but before heating and the polycarboxylic acid polymer solution has a haze of 40% or less after heating to 40°C or higher.

Preferably, in the method for using a solution of a polycarboxylic acid polymer, the solution is heated at 40°C or higher for two hours or more.

- Advantageous Effects of Invention

The method for storing a polycarboxylic acid polymer solution of the present invention having the above-described features can prevent or reduce cloudiness and an increase in viscosity of the polycarboxylic acid polymer solution after storage. Thus, the method can be suitable for storing polycarboxylic acid polymer solutions for use in various applications such as dispersants for inorganic particles, water treatment agents, builders for detergents, and compositions for detergents.

DESCRIPTION OF EMBODIMENTS

The following description is offered to specifically illustrate preferred embodiments of the present invention. It should be noted that the present invention is not limited only to these embodiments, and the embodiments may be appropriately altered within the scope of the present invention. Any combination of two or three or more of the following preferred embodiments of the present invention is also a preferred embodiment of the present invention.

<Polycarboxylic acid polymer>

The polycarboxylic acid polymer to be stored by the storage method of the present invention has a weight-average molecular weight of 1,000 to 20,000 and a degree of neutralization of 15 mol% or lower based on 100 mol% of a total of carboxyl groups and salts thereof in the polycarboxylic acid polymer.

When a solution of such a polycarboxylic acid polymer is stored at 40°C or higher, cloudiness and an increase in viscosity thereof can be prevented or reduced. The mechanism of this is presumably that the interaction between polycarboxylic acid polymer molecules is reduced.

As described in Patent Literature 1, those skilled in the art know that a polycarboxylic acid polymer with a higher degree of neutralization has improved storage stability. On the other hand, since the skilled person can easily assume that a polycarboxylic acid polymer with a low degree of neutralization may cause a problem with stability when heated based on that such a polymer has high reactivity, they cannot predict based on common technical knowledge that storing the polycarboxylic acid polymer solution at 40°C or higher can prevent or reduce cloudiness and an increase in viscosity.

The polycarboxylic acid polymer may be any one having a weight-average molecular weight and a degree of neutralization within the ranges indicated above, and preferably has a structure derived from a chain transfer agent.

When the polycarboxylic acid polymer solution is stored at room temperature or below, cloudiness and an increase in viscosity occur. This is presumably specifically because of the interaction between the carboxyl groups and the structure derived from a chain transfer agent in the polymer. A polycarboxylic acid polymer having a weight-average molecular weight of more than 20,000 and a degree of neutralization of more than 15 mol% has a low percentage of a structure derived from a chain transfer agent and a low percentage of carboxyl groups, and thus does not have the above-mentioned problems in storage. On the other hand, a polycarboxylic acid polymer having a weight-average molecular weight of 20,000 or less and a degree of neutralization of 15 mol% or less has a higher percentage of the structure derived from a chain transfer agent and a higher percentage of carboxyl groups, and the interaction therebetween is high. This may presumably result in cloudiness and an increase in viscosity.

The chain transfer agent is preferably one containing a phosphorus atom or a sulfur atom, but is not limited thereto. With such a chain transfer agent, the interaction between the carboxyl groups and the structure containing a phosphorus atom or a sulfur atom derived from the chain transfer agent is higher. Thereby, the technical significance of the present invention is exhibited more effectively. The chain transfer agent is more preferably one containing a phosphorus atom or a sulfur atom and an oxygen atom, such as phosphorous acid, hypophosphorous acid, sulfurous acid, hydrogen sulfite, dithionous acid, metabisulfurous acid, or a salt thereof, still more preferably phosphorous acid, hypophosphorous acid, hydrogen sulfite, or a salt thereof, particularly preferably phosphorous acid, hypophosphorous acid, or a salt thereof, most preferably hypophosphorous acid or a salt thereof.

When the chain transfer agent contains a phosphorus atom, the phosphorus atom is introduced into the polymer, which leads to higher interaction between the polymers. Thereby, the technical significance of the present invention is exhibited more effectively. In a preferred embodiment of the present invention, the chain transfer agent contains a phosphorus atom.

The polycarboxylic acid polymer preferably has a weight-average molecular weight of 1500 or more and 15000 or less. In this case, the technical significance of the present invention is exhibited more effectively. The weight-average molecular weight is more preferably 2500 or more, still more preferably 3000 or more, most preferably 3500 or more. The weight-average molecular weight is more preferably 10000 or less, still more preferably 8000 or less, most preferably 6000 or less.

The weight-average molecular weight of the polycarboxylic acid polymer can be measured by the method described in the EXAMPLES.

The polycarboxylic acid polymer preferably has a degree of neutralization of 10 mol% or less based on 100 mol% of a total of carboxyl groups and salts thereof in the polycarboxylic acid polymer. In this case, the technical significance of the present invention is exhibited more effectively. The degree of neutralization is more preferably 6 mol% or less, still more preferably 4 mol% or less, further more preferably 3 mol% or less, particularly preferably 1.5 mol% or less, most preferably 1 mol% or less.

The content of the structure derived from a chain transfer agent in the polycarboxylic acid polymer based on 100 mol% of structural units derived from all monomers (unsaturated carboxylic acid monomer(s) and different monomer(s)) is preferably 0.3 mol% or more and 15.0 mol% or less. The content is more preferably 0.7 mol% or more, still more preferably 1.0 mol% or more, further more preferably 1.2 mol% or more, even further more preferably 1.5 mol% or more, still further preferably 1.8 mol% or more, particularly preferably 2.0 mol% or more, further particularly preferably 2.2 mol% or more, most preferably 2.5 mol% or more. The content is more preferably 10.0 mol% or less, still more preferably 7.5 mol% or less, further preferably 7.0 mol% or less, even further preferably 6.0 mol% or less, still further preferably 5.5 mol% or less, particularly preferably 5.0 mol% or less, most preferably 4.5 mol% or less.

The polycarboxylic acid polymer has a structural unit derived from an unsaturated carboxylic acid monomer.

The unsaturated carboxylic acid monomer may be any one having a carboxyl group and an ethylenically unsaturated hydrocarbon group (unsaturated group). Examples thereof include an unsaturated monocarboxylic acid monomer and an unsaturated dicarboxylic acid monomer.

The unsaturated monocarboxylic acid monomer is a monomer containing one unsaturated group and one group capable of forming a carbanion in a molecule. Examples thereof include acids such as (meth)acrylic acid, crotonic acid, isocrotonic acid, tiglic acid, 3-methylcrotonic acid, 2-methyl-2-pentenoic acid, and α-hydroxyacrylic acid; monovalent metal salts, divalent metal salts, ammonium salts, and organic amine salts of these; a half ester of any of the unsaturated dicarboxylic acid monomers described below and a C1-C22 alcohol or a C2-C4 glycol; and a half amide of any of the unsaturated dicarboxylic acid monomers and a C1-C22 amine.

The unsaturated dicarboxylic acid monomer is a monomer containing one unsaturated group and two groups each capable of forming a carbanion in a molecule. Examples thereof include acids such as maleic acid, itaconic acid, mesaconic acid, citraconic acid, and fumaric acid; monovalent metal salts, divalent metal salts, ammonium salts, and organic amine salts of these; and anhydrides of these.

Each of the unsaturated carboxylic acid monomers may be used alone or two or more thereof may be used in combination.

The unsaturated carboxylic acid monomer is preferably (meth)acrylic acid or a salt thereof, maleic acid or a salt thereof, or maleic anhydride, more preferably (meth)acrylic acid or a salt thereof, particularly preferably acrylic acid or a salt thereof.

The content of the structural unit(s) derived from an unsaturated carboxylic acid monomer(s) in the polycarboxylic acid polymer is 85 to 100 mol% based on 100 mol% of structural units derived from all monomers. The content of the structural unit(s) is preferably 90 to 100 mol%, more preferably 92 to 100 mol%, still more preferably 95 to 100 mol%, most preferably 100 mol%.

In a preferred embodiment of the present invention, the polycarboxylic acid polymer contains a structural unit derived from (meth)acrylic acid or a salt thereof in a content of 90 to 100 mol% based on 100 mol% of structural units derived from all monomers.

The polycarboxylic acid polymer may contain a structural unit derived from a different monomer other than the unsaturated carboxylic acid monomer.

The different monomer may be any monomer as long as it is copolymerizable with the unsaturated carboxylic acid monomer. Examples thereof include hydroxy group-containing alkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and α-hydroxymethylethyl (meth)acrylate; alkyl (meth)acrylates which are C1-C18 alkyl esters of (meth)acrylic acid, such as methyl (meth)acrylate, ethyl (meth)acrylate, butyl (meth)acrylate, cyclohexyl (meth)acrylate, and lauryl (meth)acrylate; amino group-containing acrylates such as dimethylaminoethyl (meth)acrylate and quaternized compounds thereof; amide group-containing monomers such as (meth)acrylamide, dimethylacrylamide, and isopropylacrylamide; vinyl esters such as vinyl acetate; alkenes such as ethylene and propylene; aromatic vinyl monomers such as styrene; maleimide and maleimide derivatives such as phenylmaleimide and cyclohexylmaleimide; nitrile group-containing vinyl monomers such as (meth)acrylonitrile; sulfonic acid group-containing monomers such as 3-(meth)allyloxy-2-hydroxypropanesulfonic acid, 2-acrylamide-2-methylpropanesulfonic acid, 2-((meth)acryloyloxy)ethanesulfonic acid, p-styrenesulfonic acid, α-methyl-p-styrenesulfonic acid, vinyl sulfonic acid, (meth)allylsulfonic acid, isoprenesulfonic acid, 1-methyl-2-propene-1-sulfonic acid, 1,1-dimethyl-2-propene-1-sulfonic acid, 3-butene-1-sulfonic acid, and 1-butene-3-sulfonic acid, and salts thereof; phosphonic acid group-containing monomers such as vinylphosphonic acid and (meth)allylphosphonic acid; aldehyde group-containing vinyl monomers such as (meth)acrolein; alkyl vinyl ethers such as methyl vinyl ether, ethyl vinyl ether, and butyl vinyl ether; functional group-containing monomers other than the aforementioned monomers, such as vinyl chloride, vinylidene chloride, allyl alcohol, and vinylpyrrolidone; and polyalkylene glycol chain-containing monomers such as monomers having a structure in which 1 to 300 mol of an alkylene oxide is added to (meth)acrylic acid (e.g., polyalkylene glycol (meth)acrylate, monoalkoxypolyalkylene glycol (meth)acrylate) and monomers having a structure in which 1 to 300 mol of an alkylene oxide is added to an unsaturated alcohol such as vinyl alcohol, (meth)allyl alcohol, or isoprenol. Each of these different monomers may be used alone, or two or more of these may be used in combination.

The content of the structural unit(s) derived from different monomer(s) in the polycarboxylic acid polymer is 0 to 15 mol% based on 100 mol% of structural units derived from all monomers. In this case, the technical significance of the present invention is exhibited more effectively. The content of the structural unit(s) is preferably 0 to 10 mol%, more preferably 0 to 8 mol%, still more preferably 0 to 5 mol%, most preferably 0 mol%.

<Method for producing polycarboxylic acid polymer>

The polycarboxylic acid polymer may be produced by any method and can be produced by polymerizing a monomer component including an unsaturated carboxylic acid monomer. Specific examples and preferred examples of the monomer component including an unsaturated carboxylic acid monomer are as described above. The content of the unsaturated carboxylic acid monomer(s) and the different monomer(s) based on 100 mol% of all monomers in the monomer component is equal to the content of the structural unit(s) derived from the unsaturated carboxylic acid monomer(s) and the structural unit(s) derived from the different monomer(s) based on 100 mol% of the structural units derived from all monomers.

In the polymerization in the method for producing the polycarboxylic acid polymer, the polymerization of the monomer component may be started by any method, such as addition of a polymerization initiator, UV irradiation, heat application, or light irradiation in the presence of a photo initiator.

In the polymerization, a polymerization initiator is preferably used.

Preferred examples of the polymerization initiator include hydrogen peroxide; persulfates such as sodium persulfate, potassium persulfate, and ammonium persulfate; azo compounds such as dimethyl-2,2'-azobis(2-methylpropionate), 2,2'-azobis(isobutyronitrile), 2,2'-azobis(2-methylpropionamidine) dihydrochloride (2,2'-azobis-2-amidinopropane dihydrochloride), 2,2'-azobis[N-(2-carboxyethyl)-2-methylpropionamidine] hydrate, 2,2'-azobis[2-(2-imidazolin-2-yl) propane], 2,2'-azobis[2-(2-imidazolin-2-yl) propane] dihydrochloride, and 2,2'-azobis(1-imino-1-pyrrolidino-2-methylpropane) dihydrochloride; organic peroxides such as benzoyl peroxide, lauroyl peroxide, peracetic acid, di-t-butyl peroxide, and cumene hydroperoxide; and redox initiators that generate radicals and are each a combination of an oxidizing agent and a reducing agent, such as a combination of ascorbic acid and hydrogen peroxide or a combination of a persulfate and a metal salt. Preferred among these polymerization initiators are hydrogen peroxide, persulfates, and azo compounds because the amount of residual monomers tends to be reduced. More preferred are persulfates. Each of these polymerization initiators may be used alone, or two or more of these may be used in the form of a mixture. In the case of a polycarboxylic acid polymer produced using a persulfate as a polymerization initiator, a solution of the polymer tends to be highly viscous when being stored. Such a change in viscosity of the polymer solution can be sufficiently prevented or reduced by the storage method of the present invention. Thus, when the storage method of the present invention is applied to a polycarboxylic acid polymer solution produced using a persulfate, the technical significance of the present invention is exhibited more effectively.

The amount of the polymerization initiator used per mole of the monomer component (all monomers) is preferably 0.05 g or more and 10 g or less, more preferably 0.1 g or more and 5 g or less, still more preferably 0.15 g or more and 1 g or less.

In order to control the molecular weight of the polymer to be obtained, a chain transfer agent is preferably used in the polymerization. Examples of the chain transfer agent include hydrophilic chain transfer agents including: thiol chain transfer agents such as mercaptoethanol, thioglycerol, mercaptocarboxylic acids, and 2-mercaptoethanesulfonic acid; secondary alcohols such as isopropyl alcohol; and lower oxides and salts thereof such as phosphorous acid, hypophosphorous acid, salts thereof (e.g., sodium hypophosphite, potassium hypophosphite), sulfurous acid, hydrogen sulfite, dithionous acid, metabisulfurous acid, and salts thereof (e.g., sodium sulfite, sodium bisulfite, sodium dithionite, sodium metabisulfite). Preferred are phosphorous acid, hypophosphorous acid, sulfurous acid, hydrogen sulfite, dithionous acid, metabisulfurous acid, or a salt thereof, and more preferred is hypophosphorous acid or hypophosphite. The amount of the chain transfer agent used per mole of the monomer component (all monomers) is preferably 0.2 g or more and 16.0 g or less, more preferably 0.5 g or more and 11.0 g or less, still more preferably 1.0 g or more and 8.0 g or less, most preferably 1.5 g or more and 6.5 g or less.

When a solvent is used in the polymerization, it is preferably an aqueous solvent. Examples of the aqueous solvent include water; alcohols such as methyl alcohol, ethyl alcohol, isopropyl alcohol (2-propanol), n-butyl alcohol, and diethylene glycol; and glycol, glycerol, and polyethylene glycol. Preferred is water. Each of these solvents may be used alone, or two or more of these may be used in combination.

The amount of the solvent(s) used is preferably 40 to 900% by mass, more preferably 50 to 600% by mass, still more preferably 60 to 500% by mass, based on 100% by mass of the monomer component.

In the polymerization, the polymerization temperature may be any temperature. A polymerization temperature within 50°C to 150°C is preferred because a higher polymerization rate can be achieved. The polymerization temperature is more preferably 70°C to 120°C.

In the polymerization, the duration of the reaction may be appropriately set depending on the reaction temperature and the types (properties), combinations, and amounts of the monomer component, polymerization initiators, solvents, and the like, so that the polymerization reaction is completed.

<Method for storing polycarboxylic acid polymer solution>

The method for storing a solution of a polycarboxylic acid polymer of the present invention includes storing a solution of a polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer at 40°C or higher.

This method can prevent or reduce the cloudiness and the increase in viscosity of the polycarboxylic acid polymer solution.

The storage temperature is preferably 42°C or higher and 95°C or lower, more preferably 43°C or higher, still more preferably 44°C or higher, most preferably 45°C or higher. The storage temperature is more preferably 90°C or lower, still more preferably 80°C or lower, most preferably 70°C or lower.

The polycarboxylic acid polymer solution is preferably an aqueous solution.

The solids concentration of the polymer in the polycarboxylic acid polymer solution is preferably 30 to 70% by mass. In this case, the technical significance of the present invention is exhibited more effectively. A solids concentration of 30% by mass or more is preferred in terms of transportation efficiency and storage space saving. The solids concentration of the polymer is more preferably 35 to 60% by mass, still more preferably 38 to 57% by mass, further preferably 40 to 57% by mass, even further preferably 41 to 56% by mass, particularly preferably 42 to 55% by mass.

The solids concentration of the polymer can be measured by the method described in the EXAMPLES.

The mass of water in the polycarboxylic acid polymer solution is preferably within the range of 30 to 70% by mass, more preferably 40 to 65% by mass, still more preferably 43 to 62% by mass, further preferably 43 to 60% by mass, even further preferably 44 to 60% by mass, still further preferably 44 to 59% by mass, particularly preferably 45 to 58% by mass, based on 100% by mass of the total mass of the polycarboxylic acid polymer solution.

The polycarboxylic acid polymer solution may further contain a solvent other than water.

The percentage of water in 100% by mass of the solvent(s) is preferably 50% by mass or more and 100% by mass or less, more preferably 75% by mass or more and 100% by mass or less, still more preferably 90% by mass or more and 100% by mass or less, most preferably 100% by mass.

The percentage of the solvent(s) other than water is preferably 50% by mass or less, more preferably 25% by mass or less, still more preferably 10% by mass or less, most preferably 0% by mass, based on 100% by mass of the solvent(s).

In the storage method, a storage container may be made of any material. Examples thereof include highly airtight resin containers (e.g., high-density polyethylene containers), glass containers, and containers made of metal such as stainless steel. Of these, stainless steel storage containers are preferred from the viewpoint of oxygen permeability. Non-limiting preferred examples of the type of stainless steel include SUS304, SUS316, and SUS316L from the viewpoint of corrosion resistance.

In the storage method, the storage temperature may be kept at 40°C or higher by any technique. Examples of the technique include: heating part or the entire storage container; and passing the polymer solution through a heat exchanger or the like attached to the storage container. Preferred is heating part or the entire storage container. Thereby, the temperature of the polymer solution in the storage container can be kept more uniform, and the polymer solution can be more stably stored.

In the storage method, the atmosphere in the storage container may be either an air atmosphere or an inert atmosphere, with an inert atmosphere being preferred. Non-limiting examples of the inert gas include nitrogen, helium, and argon. In the storage method, more preferably, the gas phase in the storage container is purged with an inert gas.

In the storage method, preferably, the period for which the solution is stored at 40°C or higher accounts for 50% or more of the total storage period. The storage period refers to a period from the time of putting or transferring the polymer solution into a container or tank for storage, transportation, or the like to the time of taking the polymer solution out of the container or tank for storage, transportation, or the like. Specific examples of the storage period include (i) in the case where the polymerization in the production of a polycarboxylic acid polymer is completed (when aging is performed, after the polymer is aged) and the polymer is put into a storage container or tank, a period from the time of putting the polymer solution into the container or tank to the time of taking the polymer solution out of the container or tank; (ii) in the case where the polymerization in the production of a polycarboxylic acid polymer is completed (when aging is performed, after the polymer is aged) and the polymer is put into a transport container without being transferred to a storage container or tank beforehand, a period from the time of putting the polymer solution into the transport container to the time of taking the polymer solution out of the transport container; (iii) in the case where a polymer solution is put into a storage container or tank and is then taken out from the storage container, and the solution taken is put into a transport container, a sum of a period of storing the polymer solution in the storage container or tank and a period from the time of putting the polymer solution into the transport container to the time of taking the polymer solution out of the transport container; and (iv) a period of a combination and/or repetition of two or more of these specific storage embodiments described above (e.g., repetition of storage and transport in which the embodiment (ii) or (iii) is performed and then the polymer solution taken out of the transport container is put into a storage container or the like and stored). The period for which the solution is stored at 40°C or higher more preferably accounts for 70% or more, still more preferably 90% or higher.

In the storage method, the storage temperature is preferably kept at 40°C or higher continuously for 24 hours or more. The storage temperature is more preferably kept at 40°C or higher continuously for 48 hours or more, still more preferably 72 hours or more, particularly preferably 96 hours or more.

In the storage method, the storage temperature is preferably kept at 40°C or higher for at least two hours before the end of the storage period. In this case, the polycarboxylic acid polymer solution can be used immediately after the end of the storage period in a state where cloudiness and an increase in viscosity are prevented or reduced. The storage temperature is more preferably kept at 40°C or higher for at least three hours, still more preferably at least four hours, particularly preferably at least five hours before the end of the storage period.

In a preferred embodiment of the present invention, the polycarboxylic acid polymer solution is always kept at 40°C or higher during storage. In this case, the polycarboxylic acid polymer solution can be used in a state where cloudiness and an increase in viscosity are prevented or reduced at any time.

In the storage method, the storage period is not limited and is preferably 1 day or more and 730 days or less. The storage period is more preferably 2 days or more and 540 days or less, still more preferably 3 days or more and 365 days or less, particularly preferably 4 days or more and 300 days or less.

A polycarboxylic acid polymer solution stored by the storage method of the present invention can have prevented or reduced changes in viscosity.

For example, when a polycarboxylic acid polymer solution is stored at 40°C for 70 days, the viscosity change rate is preferably 40% or less, more preferably 30% or less, particularly preferably 20% or less, most preferably 10% or less. When a polycarboxylic acid polymer solution is stored at 40°C for 120 days, the viscosity change rate is preferably 50% or less, more preferably 30% or less, particularly preferably 25% or less, most preferably 20% or less.

The viscosity of the polycarboxylic acid polymer solution can be measured by the method described in the EXAMPLES.

Further, a polycarboxylic acid polymer solution stored by the storage method of the present invention can have a reduced haze.

For example, when a polycarboxylic acid polymer solution is stored at 40°C for 70 days, the polycarboxylic acid polymer solution preferably has a haze of 45% or less, more preferably 40% or less, particularly preferably 30% or less, most preferably 20% or less.

The haze of the polycarboxylic acid polymer solution can be measured by the method described in the EXAMPLES.

In the method for storing a polycarboxylic acid polymer solution of the present invention, the amount of the solution and the storage form are not limited. The method is suitably operated when the polycarboxylic acid polymer solution is handled by storing, transporting, shipping, transferring, or the like.

The polycarboxylic acid polymer solution may contain a different component other than the polycarboxylic acid polymer. Examples of the different component include unreacted residual monomers, polymerization initiators, polymerization stabilizers, polymer stabilizers, preservatives, and organic solvents. The polycarboxylic acid polymer solution may contain one or more of these components. The content of these components is preferably 30000 ppm or less, more preferably 10000 ppm or less, still more preferably 3000 ppm or less, particularly preferably 1000 ppm or less. The polymer solution may contain a heterocyclic compound such as a thiazine compound as a polymerization stabilizer or a polymer stabilizer. The content of the heterocyclic compound is preferably 100 ppm or less, more preferably 50 ppm or less, still more preferably 10 ppm or less, particularly preferably 1 ppm or less, most preferably 0 ppm.

The storage method of the present invention can sufficiently prevent or reduce cloudiness and an increase in viscosity of the polycarboxylic acid polymer solution even when the polymer solution does not contain a polymerization stabilizer or polymer stabilizer such as a heterocyclic compound.

<Method for using polycarboxylic acid polymer solution>

The present invention also relates to a method for using a solution of a polycarboxylic acid polymer, the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer, the method including, after the polycarboxylic acid polymer solution is stored at lower than 40°C, heating the solution to 40°C or higher before use. In the case where the polycarboxylic acid polymer solution is stored at lower than 40°C, the polycarboxylic acid polymer solution is heated to 40°C or higher before use. Thereby, the polycarboxylic acid polymer solution can be used in a state where cloudiness and an increase in viscosity are prevented or reduced.

Preferably, in the method for using a solution of a polycarboxylic acid polymer, a difference in viscosity of the polycarboxylic acid polymer solution between after heating to 40°C or higher and at the beginning of storage is 50% or less of a difference in viscosity of the polycarboxylic acid polymer solution between at the beginning of the storage and after being stored at lower than 40°C but before heating. The difference is more preferably 30% or less, still more preferably 20% or less, particularly preferably 10% or less.

Preferably, in the method for using a solution of a polycarboxylic acid polymer, the polycarboxylic acid polymer solution has a haze of 45% or more after being stored at lower than 40°C but before heating and the polycarboxylic acid polymer solution has a haze of 40% or less after heating to 40°C or higher. The haze of the polycarboxylic acid polymer solution after heating to 40°C or higher is more preferably 30% or less, still more preferably 20% or less, particularly preferably 10% or less.

Preferably, in the method for using a solution of a polycarboxylic acid polymer, the solution is heated at 40°C or higher for two hours or more, more preferably three hours or more, still more preferably four hours or more, particularly preferably five hours or more.

<Applications of polycarboxylic acid polymer>

The polycarboxylic acid polymer to be stored and used in the present invention may be used for coagulants, flocculants, printing inks, adhesives, soil conditioners (soil reforming agents), flame retardants, skin care products, hair care products, additives for shampoo, hair sprays, soaps, and cosmetics, anion exchange resins, dye mordants and aids for fibers and photo films, pigment spreading agents used in papermaking, paper strengthening agents, emulsifiers, antiseptic agents, softening agents for fabrics and paper, additives for lubricants, water treatment agents, fiber treatment agents, dispersants, additives for detergents, scale inhibitors, sequestrants, thickeners, various binders, and emulsifiers.

EXAMPLES

The present invention is described in more detail below with reference to examples, but the present invention is not limited to these examples. It should be noted that the terms "part(s)" and "%" refer to "part(s) by mass" and "% by mass", respectively, unless otherwise stated.

<Conditions for measurement (GPC) of weight-average molecular weight (in the case of 10,000 or less)>

Device: HLC-8320 GPC available from Tosoh Corporation
Detector: RI
Column: TSKgel G3000PWXL available from Tosoh Corporation (two columns are connected in series)
Column temperature: 40°C
Flow rate: 0.5 mL/min
Amount of liquid sample injected: 10 $\mu$L (the sample concentration is 0.5% by mass)
Calibration curve: created with a cubic equation based on Mps and elution times using polyacrylic acid standards (Mp = 900, 1250, 1770, 2925, 4100, 7500, 16000, 28000, 47500) available from American Polymer Standards Corporation and sodium acetate (Mp = 94).
Eluent: solution obtained by diluting a mixture of sodium dihydrogenphosphate dodecahydrate/disodium hydrogenphosphate dihydrate (34.5 g/46.2 g) with 5000 g of pure water.

<Conditions for measurement (GPC) of weight-average molecular weight (in the case of more than 10,000)>

Device: HLC-8320 GPC available from Tosoh Corporation
Detector: RI
Column: TSKgel GMPWXL available from Tosoh Corporation (two columns are connected in series)
Column temperature: 40°C
Flow rate: 1 mL/min
Sample liquid injection volume: 20 $\mu$L (the sample concentration is 0.5% by mass)
Calibration curve: created with a cubic equation based on Mps and elution times using polyacrylic acid standards (Mp = 1250, 28000, 47500, 193800, 392600, 589700) available from American Polymer Standards Corporation
Eluent: (60.84 mM sodium carbonate aqueous solution + 60.84 mM sodium bicarbonate aqueous solution)/acetonitrile = 83.74/16.26 (weight ratio)

<Method for measuring solid content of aqueous polymer solution>

An aqueous polymer solution in an amount of 1 g was diluted with 1 g of deionized water, dried at 150°C for 60 minutes. The evaporation residue was measured to determine the solid content using the following equation.

$$\text{Solid content (\%) = (Evaporation residue (g) after drying /Mass (g) of aqueous polymer solution before drying)} \times 100$$

<Conditions for measuring viscosity of aqueous polymer solution>

Measuring device: B-type viscometer
Temperature of aqueous solution during viscosity measurement: 25°C

<Measurement of Haze>

Measuring device: HAZE METER NDH 5000 available from NIPPON DENSHOKU INDUSTRIES CO., LTD.
Temperature of aqueous solution during measurement: 25°C

<Analysis of phosphorus-containing group>

The phosphorus atoms introduced into the polymer and the phosphorus atoms existing in an inorganic phosphate form without being introduced into the polymer were analyzed by $^{31}$P-NMR analysis.

<Production Example 1>

A 10-L stainless steel reaction vessel equipped with a reflux condenser and a stirrer was charged with 2140.0 g of deionized water, and the water was heated to the boiling point with stirring. Then, with stirring, to the polymerization reaction system at the boiling point were added dropwise a 80% by weight acrylic acid aqueous solution (hereinafter referred to as "80% AA") in an amount of 5635.9 g (i.e., 62.6 mol) over 180 minutes, a 15% by weight sodium persulfate aqueous solution (hereinafter referred to as "15% NaPS") in two stages at different feeding rates in amounts of 28.8 g over 18 minutes and subsequent 160.5 g over 167 minutes, and a 45% by mass sodium hypophosphite monohydrate aqueous solution (hereinafter referred to as "45% SHP") in two stages at different feeding rates in amounts of 133.9 g (i.e., 0.568 mol) over 18 minutes and subsequent 530.7 g (i.e., 2.25 mol) over 162 minutes, from different tip nozzles through different supply paths. The 80% AA was continuously added dropwise at a constant dropping rate. After completion of the dropwise addition of the AA, the reaction solution was kept at the boiling point (aged) for an additional 40 minutes to complete the polymerization. After completion of the polymerization, to the reaction solution were added dropwise deionized water in an amount of 1317.9 g and a 48% by weight sodium hydroxide aqueous solution (hereinafter referred to as "48% NaOH") in an amount of 52.2 g (i.e., 0.626 mol, which corresponds to an amount used to neutralize 1 mol% of the carboxyl groups in the aqueous solution) with stirring. Thus, a (meth)acrylic acid polymer aqueous solution (A) was obtained. The aqueous solution had a weight-average molecular weight (Mw) of 4,000, a solid content of 48.8%, a viscosity of 230 mPa·s, and a haze of 0%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 72:10:18. Thereby, the content of the structure derived from a chain transfer agent in 100 mol% of structural units derived from all monomers was determined to be 3.7 mol%.

<Example 1>

The (meth)acrylic acid polymer aqueous solution (A) obtained in Production Example 1 was stored in a constant temperature bath at 60°C for 70 days to obtain an aqueous solution (A-1). The aqueous solution (A-1) had a weight-average molecular weight (Mw) of 4,000, a viscosity of 230 mPa·s, and a haze of 1%. This showed that when the acrylic acid polymer aqueous solution (A) was stored at 60°C for 70 days, the percentage of change in viscosity was 0%.

<Example 2>

The (meth)acrylic acid polymer aqueous solution (A) obtained in Production Example 1 was stored in a constant temperature bath at 50°C for 70 days to obtain an aqueous solution (A-2). The aqueous solution (A-2) had a weight-average molecular weight (Mw) of 4,000, a viscosity of 230 mPa·s, and a haze of 1%. This showed that when the acrylic acid polymer aqueous solution (A) was stored at 50°C for 70 days, the percentage of change in viscosity was 0%.

<Example 3>

The (meth)acrylic acid polymer aqueous solution (A) obtained in Production Example 1 was stored in a constant temperature bath at 40°C for 70 days to obtain an aqueous solution (A-3). The aqueous solution (A-3) had a weight-average molecular weight (Mw) of 4,000, a viscosity of 230 mPa·s, and a haze of 1%. This showed that when the acrylic acid polymer aqueous solution (A) was stored at 40°C for 70 days, the percentage of change in viscosity was 0%.

<Comparative Example 1>

The (meth)acrylic acid polymer aqueous solution (A) obtained in Production Example 1 was stored in a constant temperature bath at 20°C for 70 days to obtain an aqueous solution (A-4). The aqueous solution (A-4) had a weight-average molecular weight (Mw) of 4,000, a viscosity of 430 mPa·s, and a haze of 95%. This showed that when the acrylic acid polymer aqueous solution (A) was stored at 20°C for 70 days, the percentage of change in viscosity was 87%.

<Comparative Example 2>

The (meth)acrylic acid polymer aqueous solution (A) obtained in Production Example 1 was stored in a constant temperature bath at 5°C for 70 days to obtain an aqueous solution (A-5). The aqueous solution (A-5) had a weight-average molecular weight (Mw) of 4,000, a viscosity of 480 mPa·s, and a haze of 98%. This showed that when the acrylic acid polymer aqueous solution (A) was stored at 5°C for 70 days, the percentage of change in viscosity was 109%.

<Example 4>

The (meth)acrylic acid polymer aqueous solution (A-4) obtained in Comparative Example 1 was stored in a constant temperature bath at 60°C for five hours to obtain an aqueous solution (A-6). The aqueous solution (A-6) had a weight-average molecular weight (Mw) of 4,000, a viscosity of 240 mPa·s, and a haze of 0%.

<Example 5>

The (meth)acrylic acid polymer aqueous solution (A-5) obtained in Comparative Example 2 was stored in a constant temperature bath at 60°C for five hours to obtain an aqueous solution (A-7). The aqueous solution (A-7) had a weight-average molecular weight (Mw) of 4,000, a viscosity of 230 mPa·s, and a haze of 0%.

<Comparative Example 3>

The (meth)acrylic acid polymer aqueous solution (A-5) obtained in Comparative Example 2 was stored in a constant temperature bath at 25°C for five hours to obtain an aqueous solution (A-8). The aqueous solution (A-8) had a weight-average molecular weight (Mw) of 4,000, a viscosity of 480 mPa·s, and a haze of 98%.

<Production Example 2>

A 2.5-L stainless steel reaction vessel equipped with a reflux condenser and a stirrer was charged with 283.0 g of deionized water, and the water was heated to the boiling point with stirring. Then, with stirring, to the polymerization reaction system at the boiling point were added dropwise 80% AA in an amount of 702.1 g (i.e., 7.80 mol) over 180 minutes, 15% NaPS in an amount of 39.1 g over 195 minutes, 45% SHP in two stages at different feeding rates in amounts of 8.7 g (i.e., 0.0368 mol) over 18 minutes and subsequent 35.1 g (i.e., 0.149 mol) over 162 minutes, and deionized water in an amount of 132.1 g over 53 minutes from 92 minutes after the start of the dropwise addition of the 80% AA, from different tip nozzles through different supply paths. These components other than 45% SHP were each continuously added dropwise at constant dropping rates. After completion of the dropwise addition of the AA, the reaction solution was kept at the boiling point (aged) for an additional 30 minutes to complete the polymerization. Thus, a (meth)acrylic acid polymer aqueous solution (B) was obtained. The aqueous solution had a weight-average molecular weight (Mw) of 10,000, a solid content of 49.8%, and a viscosity of 550 mPa·s. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 75:12:13. Thereby, the content of the structure derived from a chain transfer agent in 100 mol% of structural units derived from all monomers was determined to be 2.1 mol%.

<Example 6>

The (meth)acrylic acid polymer aqueous solution (B) obtained in Production Example 2 was stored in a constant temperature bath at 50°C for 120 days to obtain an aqueous solution (B-1). The aqueous solution (B-1) had a weight-average molecular weight (Mw) of 10,000 and a viscosity of 540 mPa·s. This showed that when the acrylic acid polymer aqueous solution (B) was stored at 50°C for 120 days, the percentage of change in viscosity was -2%.

<Example 7>

The (meth)acrylic acid polymer aqueous solution (B) obtained in Production Example 2 was stored in a constant temperature bath at 40°C for 120 days to obtain an aqueous solution (B-2). The aqueous solution (B-2) had a weight-average molecular weight (Mw) of 10,000 and a viscosity of 540 mPa·s. This showed that when the acrylic acid polymer aqueous solution (B) was stored at 40°C for 120 days, the percentage of change in viscosity was -2%.
<Comparative Example 4>
The (meth)acrylic acid polymer aqueous solution (B) obtained in Production Example 2 was stored in a constant temperature bath at 2°C for 120 days to obtain an aqueous solution (B-3). The aqueous solution (B-3) had a weight-average molecular weight (Mw) of 10,000 and a viscosity of 1150 mPa·s. This showed that when the acrylic acid polymer aqueous solution (B) was stored at 2°C for 120 days, the percentage of change in viscosity was 109%.

<Example 8>

The (meth)acrylic acid polymer aqueous solution (B-3) obtained in Comparative Example 4 was stored in a constant temperature bath at 60°C for five hours to obtain an aqueous solution (B-4). The aqueous solution (B-4) had a weight-average molecular weight (Mw) of 10,000 and a viscosity of 550 mPa·s.

<Comparative Example 5>

The (meth)acrylic acid polymer aqueous solution (B-3) obtained in Comparative Example 4 was stored in a constant temperature bath at 25°C for five hours to obtain an aqueous solution (B-5). The aqueous solution (B-5) had a weight-average molecular weight (Mw) of 10,000 and a viscosity of 1150 mPa·s.

<Production Example 3>

A 2.5-L stainless steel reaction vessel equipped with a reflux condenser and a stirrer was charged with 280.4 g of deionized water, and the water was heated to the boiling point with stirring. Then, with stirring, to the polymerization reaction system at the boiling point were added dropwise 80% AA in an amount of 695.6 g (i.e., 7.73 mol) over 180 minutes, 15% NaPS in an amount of 38.7 g over 195 minutes, 45% SHP in two stages at different feeding rates in amounts of 10.9 g (i.e., 0.0463 mol) over 18 minutes and subsequent 43.5 g (i.e., 0.185 mol) over 162 minutes, and deionized water in an amount of 130.8 g over 53 minutes from 92 minutes after the start of the dropwise addition of the 80% AA, from different tip nozzles through different supply paths. These components other than 45% SHP were each continuously added dropwise at constant dropping rates. After completion of the dropwise addition of the AA, the reaction solution was kept at the boiling point (aged) for an additional 30 minutes to complete the polymerization. Thus, a (meth)acrylic acid polymer aqueous solution (C) was obtained. The aqueous solution had a weight-average molecular weight (Mw) of 7,200, a solid content of 49.7%, a viscosity of 480 mPa·s, and a haze of 1%. In the analysis of phosphorus atoms, the ratio of the sum of the phosphorus atoms introduced into the polymer chain and the phosphorus atoms introduced into the polymer ends to the phosphorus atoms existing in an inorganic phosphate form without being introduced into the polymer was 80:20. Thereby, the content of the structure derived from a chain transfer agent in 100 mol% of structural units derived from all monomers was determined to be 2.4 mol%.

<Example 9>

The (meth)acrylic acid polymer aqueous solution (C) obtained in Production Example 3 was stored in a constant temperature bath at 50°C for 50 days to obtain an aqueous solution (C-1). The aqueous solution (C-1) had a weight-average molecular weight (Mw) of 7,200, a viscosity of 490 mPa·s, and a haze of 0%. This showed that when the acrylic acid polymer aqueous solution (C) was stored at 50°C for 50 days, the percentage of change in viscosity was 2%.

<Example 10>

The (meth)acrylic acid polymer aqueous solution (C) obtained in Production Example 3 was stored in a constant temperature bath at 40°C for 50 days to obtain an aqueous solution (C-2). The aqueous solution (C-2) had a weight-average molecular weight (Mw) of 7,200, a viscosity of 490 mPa·s, and a haze of 1%. This showed that when the acrylic acid polymer aqueous solution (C) was stored at 40°C for 50 days, the percentage of change in viscosity was 2%.

<Comparative Example 6>

The (meth)acrylic acid polymer aqueous solution (C) obtained in Production Example 3 was stored in a constant temperature bath at 5°C for 50 days to obtain an aqueous solution (C-3). The aqueous solution (C-3) had a weight-average molecular weight (Mw) of 7,200, a viscosity of 2450 mPa·s, and a haze of 55%. This showed that when the acrylic acid polymer aqueous solution (C) was stored at 5°C for 50 days, the percentage of change in viscosity was 410%.

<Example 11>

The (meth)acrylic acid polymer aqueous solution (C-3) obtained in Comparative Example 6 was stored in a constant temperature bath at 60°C for five hours to obtain an aqueous solution (C-4). The aqueous solution (C-4) had a weight-average molecular weight (Mw) of 7,200, a viscosity of 490 mPa·s, and a haze of 1%.

<Comparative Example 7>

The (meth)acrylic acid polymer aqueous solution (C-3) obtained in Comparative Example 6 was stored in a constant temperature bath at 25°C for five hours to obtain an aqueous solution (C-5). The aqueous solution (C-5) had a weight-average molecular weight (Mw) of 7,200, a viscosity of 2450 mPa·s, and a haze of 55%.

<Production Example 4>

A 10-L stainless steel reaction vessel equipped with a reflux condenser and a stirrer was charged with 1168.8 g of deionized water, and the water was heated to the boiling point with stirring. Then, with stirring, to the polymerization reaction system at the boiling point were added dropwise 80% AA in an amount of 3078.2 g (i.e., 34.2 mol) over 180 minutes, 15% NaPS in two stages at different feeding rates in amounts of 15.8 g over 18 minutes and subsequent 87.7 g over 167 minutes, and 45% SHP in two stages at different feeding rates in amounts of 83.5 g (i.e., 0.355 mol) over 18 minutes and subsequent 330.7 g (i.e., 1.40 mol) over 162 minutes, from different tip nozzles through different supply paths. The 80% AA was continuously added dropwise at a constant dropping rate. After completion of the dropwise addition of the AA, the reaction solution was kept at the boiling point (aged) for an additional 40 minutes to complete the polymerization. After completion of the polymerization, to the reaction solution was added dropwise deionized water in an amount of 511.5 g. Thus, a (meth)acrylic acid polymer aqueous solution (D) was obtained. The aqueous solution had a weight-average molecular weight (Mw) of 3,300, a solid content of 51.1%, a viscosity of 250 mPa·s, and a haze of 1%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 71:14:15. Thereby, the content of the structure derived from a chain transfer agent in 100 mol% of structural units derived from all monomers was determined to be 4.4 mol%.

<Example 12>

The (meth)acrylic acid polymer aqueous solution (D) obtained in Production Example 4 was stored in a constant temperature bath at 50°C for 70 days to obtain an aqueous solution (D-1). The aqueous solution (D-1) had a weight-average molecular weight (Mw) of 3,300, a viscosity of 250 mPa·s, and a haze of 0%. This showed that when the acrylic acid polymer aqueous solution (D) was stored at 50°C for 70 days, the percentage of change in viscosity was 0%.

<Example 13>

The (meth)acrylic acid polymer aqueous solution (D) obtained in Production Example 4 was stored in a constant temperature bath at 40°C for 70 days to obtain an aqueous solution (D-2). The aqueous solution (D-2) had a weight-average molecular weight (Mw) of 3,300, a viscosity of 250 mPa·s, and a haze of 0%. This showed that when the acrylic acid polymer aqueous solution (D) was stored at 40°C for 70 days, the percentage of change in viscosity was 0%.

<Comparative Example 8>

The (meth)acrylic acid polymer aqueous solution (D) obtained in Production Example 4 was stored in a constant temperature bath at 5°C for 70 days to obtain an aqueous solution (D-3). The aqueous solution (D-3) had a weight-average molecular weight (Mw) of 3,300, a viscosity of 350 mPa·s, and a haze of 93%. This showed that when the acrylic acid polymer aqueous solution (D) was stored at 5°C for 70 days, the percentage of change in viscosity was 40%.

<Example 14>

The (meth)acrylic acid polymer aqueous solution (D-3) obtained in Comparative Example 8 was stored in a constant temperature bath at 60°C for 24 hours to obtain an aqueous solution (D-4). The aqueous solution (D-4) had a weight-average molecular weight (Mw) of 3,300, a viscosity of 250 mPa·s, and a haze of 1%.
<Comparative Example 9>
The (meth)acrylic acid polymer aqueous solution (D-3) obtained in Comparative Example 8 was stored in a constant temperature bath at 25°C for 24 hours to obtain an aqueous solution (D-5). The aqueous solution (D-5) had a weight-average molecular weight (Mw) of 3,300, a viscosity of 350 mPa·s, and a haze of 93%.

<Production Example 5>

A 10-L stainless steel reaction vessel equipped with a reflux condenser and a stirrer was charged with 1092.4 g of deionized water, and the water was heated to the boiling point with stirring. Then, with stirring, to the polymerization reaction system at the boiling point were added dropwise 80% AA in an amount of 2876.8 g (i.e., 32.0 mol) over 180 minutes, 15% NaPS in two stages at different feeding rates in amounts of 14.7 g over 18 minutes and subsequent 81.9 g over 167 minutes, and 45% SHP in two stages at different feeding rates in amounts of 89.7 g (i.e., 0.381 mol) over 18 minutes and subsequent 344.5 g (i.e., 1.46 mol) over 162 minutes, from different tip nozzles through different supply paths. The 80% AA was continuously added dropwise at a constant dropping rate. After completion of the dropwise addition of the AA, the reaction solution was kept at the boiling point (aged) for an additional 40 minutes to complete the polymerization. Thus, a (meth)acrylic acid polymer aqueous solution (E) was obtained.

<Production Example 6>

A 2.5-L stainless steel reaction vessel equipped with a reflux condenser and a stirrer was charged with 829.9 g of the (meth)acrylic acid polymer aqueous solution (E) obtained in Production Example 5. Then, to the vessel were added dropwise deionized water in an amount of 37.8 g and 48% NaOH in an amount of 12.3 g (i.e., 0.148 mol, which corresponds to an amount used to neutralize 2.5 mol% of the carboxyl groups in the aqueous solution (E)) with stirring. Thus, a (meth)acrylic acid polymer aqueous solution (F) was obtained. The aqueous solution had a weight-average molecular weight (Mw) of 2,850, a solid content of 53.6%, a viscosity of 410 mPa·s, and a haze of 0%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 73:13:14. Thereby, the content of the structure derived from a chain transfer agent in 100 mol% of structural units derived from all monomers was determined to be 5.0 mol%.

<Example 15>

The (meth)acrylic acid polymer aqueous solution (F) obtained in Production Example 6 was stored in a constant temperature bath at 50°C for 120 days to obtain an aqueous solution (F-1). The aqueous solution (F-1) had a weight-average molecular weight (Mw) of 2,850, a viscosity of 420 mPa·s, and a haze of 0%. This showed that when the acrylic acid polymer aqueous solution (F) was stored at 50°C for 120 days, the percentage of change in viscosity was 2%.

<Example 16>

The (meth)acrylic acid polymer aqueous solution (F) obtained in Production Example 6 was stored in a constant temperature bath at 40°C for 120 days to obtain an aqueous solution (F-2). The aqueous solution (F-2) had a weight-average molecular weight (Mw) of 2,850, a viscosity of 420 mPa·s, and a haze of 0%. This showed that when the acrylic acid polymer aqueous solution (F) was stored at 40°C for 120 days, the percentage of change in viscosity was 2%.

<Comparative Example 10>

The (meth)acrylic acid polymer aqueous solution (F) obtained in Production Example 6 was stored in a constant temperature bath at 2°C for 120 days to obtain an aqueous solution (F-3). The aqueous solution (F-3) had a weight-average molecular weight (Mw) of 2,850, a viscosity of 530 mPa·s, and a haze of 98%. This showed that when the acrylic acid polymer aqueous solution (F) was stored at 2°C for 120 days, the percentage of change in viscosity was 29%.

<Example 17>

The (meth)acrylic acid polymer aqueous solution (F-3) obtained in Comparative Example 10 was stored in a constant temperature bath at 60°C for 24 hours to obtain an aqueous solution (F-4). The aqueous solution (F-4) had a weight-average molecular weight (Mw) of 2,850, a viscosity of 430 mPa·s, and a haze of 0%.

<Comparative Example 11>

The (meth)acrylic acid polymer aqueous solution (F-3) obtained in Comparative Example 10 was stored in a constant temperature bath at 25°C for 24 hours to obtain an aqueous solution (F-5). The aqueous solution (F-5) had a weight-average molecular weight (Mw) of 2,850, a viscosity of 530 mPa·s, and a haze of 98%.

<Production Example 7>

A 2.5-L stainless steel reaction vessel equipped with a reflux condenser and a stirrer was charged with 824.2 g of the (meth)acrylic acid polymer aqueous solution (E) obtained in Production Example 5. Then, to the vessel were added dropwise deionized water in an amount of 31.4 g and 48% NaOH in an amount of 24.4 g (i.e., 0.293 mol, which corresponds to an amount used to neutralize 5 mol% of the carboxyl groups in the aqueous solution (E)) with stirring. Thus, a (meth)acrylic acid polymer aqueous solution (G) was obtained. The aqueous solution had a weight-average molecular weight (Mw) of 2,850, a solid content of 53.9%, a viscosity of 500 mPa·s, and a haze of 0%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 73:13:14. Thereby, the content of the structure derived from a chain transfer agent in 100 mol% of structural units derived from all monomers was determined to be 5.0 mol%.

<Example 18>

The (meth)acrylic acid polymer aqueous solution (G) obtained in Production Example 7 was stored in a constant temperature bath at 50°C for 100 days to obtain an aqueous solution (G-1). The aqueous solution (G-1) had a weight-average molecular weight (Mw) of 2,850, a viscosity of 500 mPa·s, and a haze of 0%. This showed that when the acrylic acid polymer aqueous solution (G) was stored at 50°C for 100 days, the percentage of change in viscosity was 0%.

<Example 19>

The (meth)acrylic acid polymer aqueous solution (G) obtained in Production Example 7 was stored in a constant temperature bath at 40°C for 100 days to obtain an aqueous solution (G-2). The aqueous solution (G-2) had a weight-average molecular weight (Mw) of 2,850, a viscosity of 500 mPa·s, and a haze of 0%. This showed that when the acrylic acid polymer aqueous solution (G) was stored at 40°C for 100 days, the percentage of change in viscosity was 0%.

<Comparative Example 12>

The (meth)acrylic acid polymer aqueous solution (G) obtained in Production Example 7 was stored in a constant temperature bath at 2°C for 100 days to obtain an aqueous solution (G-3). The aqueous solution (G-3) had a weight-average molecular weight (Mw) of 2,850, a viscosity of 560 mPa·s, and a haze of 69%. This showed that when the acrylic acid polymer aqueous solution (G) was stored at 2°C for 100 days, the percentage of change in viscosity was 12%.

<Example 20>

The (meth)acrylic acid polymer aqueous solution (G-3) obtained in Comparative Example 12 was stored in a constant temperature bath at 60°C for five hours to obtain an aqueous solution (G-4). The aqueous solution (G-4) had a weight-average molecular weight (Mw) of 2,850, a viscosity of 500 mPa·s, and a haze of 0%.

<Comparative Example 13>

The (meth)acrylic acid polymer aqueous solution (G-3) obtained in Comparative Example 12 was stored in a constant temperature bath at 25°C for five hours to obtain an aqueous solution (G-5). The aqueous solution (G-5) had a weight-average molecular weight (Mw) of 2,850, a viscosity of 560 mPa·s, and a haze of 69%.

<Reference Example 1>

A 2.5-L stainless steel reaction vessel equipped with a reflux condenser and a stirrer was charged with 784.0 g of the (meth)acrylic acid polymer aqueous solution (E) obtained in Production Example 5. Then, to the vessel were added dropwise deionized water in an amount of 3.2 g and 48% NaOH in an amount of 92.8 g (i.e., 1.11 mol, which corresponds to an amount used to neutralize 20 mol% of the carboxyl groups in the aqueous solution (E)) with stirring. Thus, a (meth)acrylic acid polymer aqueous solution (H) was obtained. The aqueous solution had a weight-average molecular weight (Mw) of 2,850, a solid content of 54.0%, a viscosity of 1150 mPa·s, and a haze of 1%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 73:13:14. Thereby, the content of the structure derived from a chain transfer agent in 100 mol% of structural units derived from all monomers was determined to be 5.0 mol%. The aqueous solution (H) was stored in a constant temperature bath at 50°C for 140 days to obtain an aqueous solution (H-1). The aqueous solution (H-1) had a weight-average molecular weight (Mw) of 2,850, a viscosity of 1150 mPa·s, and a haze of 1%. The aqueous solution (H) was stored in a constant temperature bath at 40°C for 140 days to obtain an aqueous solution (H-2). The aqueous solution (H-2) had a weight-average molecular weight (Mw) of 2,850, a viscosity of 1150 mPa·s, and a haze of 1%. The aqueous solution (H) was stored in a constant temperature bath at 2°C for 140 days to obtain an aqueous solution (H-3). The aqueous solution (H-3) had a weight-average molecular weight (Mw) of 2,850, a viscosity of 1150 mPa·s, and a haze of 1%. When the degree of neutralization was 20 mol% based on 100 mol% of the total of the carboxyl groups and salts thereof in the (meth)acrylic acid polymer, problems such as cloudiness and an increase in viscosity did not occur.

<Reference Example 2>

A 2.5-L stainless steel reaction vessel equipped with a reflux condenser and a stirrer was charged with 422.5 g of deionized water, and the water was heated to the boiling point with stirring. Then, with stirring, to the polymerization reaction system at the boiling point were added dropwise 80% AA in an amount of 632.8 g (i.e., 7.03 mol) over 120 minutes, 15% NaPS in an amount of 31.3 g over 130 minutes, 45% SHP in two stages at different feeding rates in amounts of 2.5 g (i.e., 0.0106 mol) over 15 minutes and subsequent 8.7 g (i.e., 0.0369 mol) over 105 minutes, and deionized water in two stages at different feeding rates in amounts of 10.8 g over 15 minutes and subsequent 37.9 g over 105 minutes, from different tip nozzles through different supply paths. The 80% AA and 15% NaPS were each continuously added dropwise at constant dropping rates. After completion of the dropwise addition of the AA, the reaction solution was kept at the boiling point (aged) for an additional 90 minutes to complete the polymerization. After completion of the polymerization, to the reaction solution was added dropwise deionized water in an amount of 53.3 g. Thus, a (meth)acrylic acid polymer aqueous solution (I) was obtained. The aqueous solution had a weight-average molecular weight (Mw) of 47,000, a solid content of 43.6%, a viscosity of 1250 mPa·s, and a haze of 1%. In the analysis of phosphorus atoms, the ratio of the phosphorus atoms introduced into the polymer chain to the phosphorus atoms introduced into the polymer ends to the phosphorus atoms existing in an inorganic phosphate form without being introduced into the polymer was 61:16:23. Thereby, the content of the structure derived from a chain transfer agent in 100 mol% of structural units derived from all monomers was determined to be 0.5 mol%. The aqueous solution (I) was stored in a constant temperature bath at 50°C for 140 days to obtain an aqueous solution (1-1). The aqueous solution (I-1) had a weight-average molecular weight (Mw) of 47,000, a viscosity of 1250 mPa·s, and a haze of 0%. The aqueous solution (I) was stored in a constant temperature bath at 40°C for 140 days to obtain an aqueous solution (1-2). The aqueous solution (I-2) had a weight-average molecular weight (Mw) of 47,000, a viscosity of 1250 mPa·s, and a haze of 0%. The aqueous solution (I) was stored in a constant temperature bath at 2°C for 140 days to obtain an aqueous solution (1-3). The aqueous solution (I-3) had a weight-average molecular weight (Mw) of 47,000, a viscosity of 1250 mPa·s, and a haze of 1%. When the (meth)acrylic acid polymer had a weight-average molecular weight of 47,000, problems such as cloudiness and an increase in viscosity did not occur.

**Claims**

1. A method for storing a solution of a polycarboxylic acid polymer,

   the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer,
   the polycarboxylic acid polymer comprising a structural unit derived from an unsaturated carboxylic acid monomer in a content of 85 to 100 mol% based on 100 mol% of structural units derived from all monomers,
   the storage method comprising storing at 40°C or higher.

2. The method for storing a solution of a polycarboxylic acid polymer according to claim 1,
   wherein the polycarboxylic acid polymer comprises a structure derived from a chain transfer agent.

3. The method for storing a solution of a polycarboxylic acid polymer according to claim 2,
   wherein the polycarboxylic acid polymer comprises the structure derived from a chain transfer agent in a content of 0.7 to 15.0 mol% based on 100 mol% of structural units derived from all monomers.

4. The method for storing a solution of a polycarboxylic acid polymer according to claim 2 or 3,
   wherein the chain transfer agent contains a phosphorus atom.

5. The method for storing a solution of a polycarboxylic acid polymer according to any one of claims 1 to 4,
   wherein the polycarboxylic acid polymer comprises a structural unit derived from (meth)acrylic acid or a salt thereof in a content of 90 to 100 mol% based on 100 mol% of structural units derived from all monomers.

6. The method for storing a solution of a polycarboxylic acid polymer according to any one of claims 1 to 5,
   wherein the polycarboxylic acid polymer solution is stored for one day or more.

7. A method for using a solution of a polycarboxylic acid polymer,

   the polycarboxylic acid polymer having a weight-average molecular weight of 1,000 to 20,000 and a degree of neutralization of 15 mol% or lower based on 100 mol% of a total of carboxyl groups and salts thereof in the polycarboxylic acid polymer,
   the method comprising, after the polycarboxylic acid polymer solution is stored at lower than 40°C, heating the solution to 40°C or higher before use.

8. The method for using a solution of a polycarboxylic acid polymer according to claim 7,
   wherein a difference in viscosity of the polycarboxylic acid polymer solution between after heating to 40°C or higher and at the beginning of storage is 50% or less of a difference in viscosity of the polycarboxylic acid polymer solution between at the beginning of the storage and after being stored at lower than 40°C but before heating.

9. The method for using a solution of a polycarboxylic acid polymer according to claim 7 or 8,
   wherein the polycarboxylic acid polymer solution has a haze of 45% or more after being stored at lower than 40°C but before heating and the polycarboxylic acid polymer solution has a haze of 40% or less after heating to 40°C or higher.

10. The method for using a solution of a polycarboxylic acid polymer according to any one of claims 7 to 9,
    wherein the solution is heated at 40°C or higher for two hours or more.

## INTERNATIONAL SEARCH REPORT

| | International application No. |
|---|---|
| | PCT/JP2021/022639 |

### A. CLASSIFICATION OF SUBJECT MATTER
C08F 6/06(2006.01)i; C08F 20/04(2006.01)i
FI: C08F20/04; C08F6/06

According to International Patent Classification (IPC) or to both national classification and IPC

### B. FIELDS SEARCHED

Minimum documentation searched (classification system followed by classification symbols)
C08F6/06; C08F20/04

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2000-198809 A (SANYO CHEMICAL INDUSTRIES, LTD.) 18 July 2000 (2000-07-18) claims, examples 1, 3-4, comparative example 1, paragraph [0054] | 1-6<br>7-10 |
| X<br>A | JP 2020-84074 A (NIPPON SHOKUBAI CO., LTD.) 04 June 2020 (2020-06-04) claims, paragraphs [0021], [0024], [0032], [0040], example 3 | 1-6<br>7-10 |
| A | JP 2014-505753 A (BASF SE) 06 March 2014 (2014-03-06) claims, examples | 1-10 |
| A | WO 2016/043248 A1 (NIPPON SHOKUBAI CO., LTD.) 24 March 2016 (2016-03-24) claims, examples | 1-10 |
| A | WO 2016/104261 A1 (NIPPON SHOKUBAI CO., LTD.) 30 June 2016 (2016-06-30) claims, examples | 1-10 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 July 2021 (20.07.2021) | 03 August 2021 (03.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2021/022639 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-160288 A (NIPPON SHOKUBAI CO., LTD.) 05 September 2016 (2016-09-05) claims, examples | 1-10 |
| A | JP 2016-176029 A (NIPPON SHOKUBAI CO., LTD.) 06 October 2016 (2016-10-06) claims, examples | 1-10 |

Form PCT/ISA/210 (continuation of second sheet) (January 2015)

**INTERNATIONAL SEARCH REPORT**

Information on patent family members

International application No.

PCT/JP2021/022639

| Patent Documents referred in the Report | Publication Date | Patent Family | Publication Date |
|---|---|---|---|
| JP 2000-198809 A | 18 Jul. 2000 | (Family: none) | |
| JP 2020-84074 A | 04 Jun. 2020 | (Family: none) | |
| JP 2014-505753 A | 06 Mar. 2014 | US 2012/0157596 A1 claims, examples WO 2012/083196 A2 EP 2651991 A2 CN 103314019 A KR 10-2014-0012044 A | |
| WO 2016/043248 A1 | 24 Mar. 2016 | US 2017/0275404 A1 claims, examples CN 106795247 A | |
| WO 2016/104261 A1 | 30 Jun. 2016 | US 2017/0321032 A1 claims, examples CN 107109017 A | |
| JP 2016-160288 A | 05 Sep. 2016 | (Family: none) | |
| JP 2016-176029 A | 06 Oct. 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014505753 T

- JP 6027297 B